# EUROPÄISCHE PATENTANMELDUNG

(11) **EP 0 581 223 A1**
(43) Veröffentlichungstag der Anmeldung: **02.02.1994**
(21) Anmeldenummer: 93111896.2
(22) Anmeldetag: 24.07.1993
(51) Int. Cl.: B62B 3/10, B66C 23/48, B66C 1/42

(54) **Transport- und Bugsiergerät**

(30) Priorität: 25.07.1992 DE 4224638
(71) Anmelder: Hessabi, Iradj, D-33813 Oerlinghausen (DE)
(72) Erfinder: Hessabi, Iradj, D-33813 Oerlinghausen (DE)
(74) Vertreter: Hanewinkel, Lorenz, Dipl.-Phys.

(57) **Zusammenfassung**

Transportgerät, insbesondere für das Transportieren und Bugsieren von Fässern, mit einem Fahrgestell (1), einer darauf angeordneten Vertikalstützte (2), einem daran axial verschieblich und vertikal schwenkbar gelagerten Ausleger (3) mit einem einenends daran gehaltenen Tragseil (4), das einenends zu einer Seilwinde (31) führt und andernends eine Greifzange (5) mit einem Steuerkopf (50) trägt, von dem ein Steuermittel (40) parallel zum Tragseil (4) an den Ausleger (3) geführt ist.

An dem Ausleger (3) sind mindestens zwei Tragseilführungen (35) nebeneinander beabstandet miteinander verbunden angeordnet sind, die je ein Tragseil (4) tragen, das je eine Greiferzange (5) trägt. Die Seilwinde (31) wickelt diese Tragseile (4) parallel auft und handgesteuert freigegeben gebremst ab.

Das Gerät ist von Körpergröße eines Bedieners und zusammenfaltbar tragbar.

Die Vorrichtung ist zum Entladen von Getränkefässern und deren Verbringung in den Keller mit einer Person geeignet.

## Beschreibung

Die Erfindung betrifft ein Transportgerät, insbesondere für das Transportieren und Bugsieren von Fässern, mit einem Fahrgestell, einer darauf angeordneten Vertikalstützte, einem daran axial verschieblich und vertikal schwenkbar gelagerten Ausleger mit einem einenends daran gehaltenen Tragseil, das einenends zu einer Seilwinde führt und andernends eine Greifzange mit einem Steuerkopf trägt, von dem ein Steuermittel parallel zum Tragseil an den Ausleger geführt ist.

Derartige Vorrichtungen sind in Form von Kränen und Hebezeuge allgemein bekannt, sie eignen sich jedoch nicht für das Entladen von Getränkefässern von Lieferfahrzeugen und das Verbringen in Lagerkeller bei engen Raumverhältnissen insbesondere in Fußgängerzonen.

Bei dem herkömmlichen Verbringen von Fässern in Keller durch enge Kelleröffnungen sind gewöhnlich zwei Personen beschäftigt, wobei die eine Person das Faß zur Kelleröffnung rollt und dann in den Keller hinunterfallen läßt und eine zweite Person dieses Faß auf einem Dämpfer auffallend ergreift und weiter transportiert. Diese Tätigkeiten sind außerordentlich gefährlich und anstrengend.

Es ist Aufgabe der Erfindung, ein Transport- und Bugsiergerät für das Entladen von Fässern und deren Einbringen in Lagerkeller durch enge Kelleröffnungen durch eine Person zu schaffen.

Die Lösung besteht darin, daß an dem Ausleger mindestens zwei Tragseilführungen nebeneinander beabstandet miteinander verbunden angeordnet sind, die je ein Tragseil tragen, das je eine Greiferzange trägt, und daß die Seilwinde diese Tragseile parallel aufwickelt und handgesteuert freigegeben gebremst abwickelt.

Vorteilhafte Ausgestaltungen sind in den Unteransprüchen angegeben.

Die erfindungsgemäße Ausgestaltung des Transportgerätes mit zwei parallel angeordneten Greiferzangen die parallel zu betätigen sind, ermöglicht es einem Bediener, zielgerecht ein Faß zu ergreifen und mit horizontaler Faß-Achse vom Wagen zu nehmen, wobei er den Ausleger an die vertikalen Stütze zurückzieht, und dann das gesamte Transportgerät zu dem Kellerloch zu fahren und dort gedämpft seine Absenkung durch Freigabe der Seilwinde vorzunehmen, so daß das Faß sachte im Keller auf seine verstärkten Rollringe aufsetzt, worauf sich die Greifzangen lösen und zurückziehen lassen.

In einer vorteilhaften Ausgestaltung sind die Greifzangen innenseitig mit Rollen bestückt, so daß das Faß sowohl auf dem Wagen als auch an der Kellerwand oder auf dem Boden von den Greifzangen gehalten rollbar ist. Dies vereinfacht den gesamten Transportvorgang. Die Greifzangen sind zweckmäßig teilkreisförmig so ausgestaltet, daß nach unten ein ausreichender Freiraum besteht, durch den das Faß den Boden berühren und dort abrollen kann. Um auch ein Abrollen an der Kellerwandung zu ermöglichen, ist außerdem zumindest der innenseitige Zangenarm so flach ausgestaltet, daß die üblichen Rollsicken der Getränkefässer jeweils darüberhinausragen.

Vorteilhaft besteht jede Greifzange aus zwei teilkreisförmigen Zangenarmen, welche an einem Steuerkopf gelenkig gelagert sind und von denen sich Hebelarme erstrecken zwischen denen eine Spreiz- und Schließvorrichtung angeordnet ist. Diese Spreiz- und Schließvorrichtung ist vorteilhaft eigensicher in der Schließstellung, indem diese federbelastet in eine Totstellung verbracht ist, aus der sie mittels handbetätigbarer Zugmittel herauszubringen ist.

Die Seilwinde besteht vorteilhaft aus zwei Seiltrommeln für die beiden Tragseile, die über ein Seilgetriebe mit einem Dämpfer für ein langsames Herablassen des angehängten Fasses verbunden sind. Das Wiedereinziehen des Seiles geschieht über das Seilgetriebe entsprechend dem Übersetzungsverhältnis relativ schnell.

Der Ausleger ist in einem Schwenkkopf horinzontal verschieblich gehalten, und er kann so verschwenkt werden, daß die Greifzange von oben über ein auf einem Wagen liegendes Faß verbracht werden kann. In der oberen Anschlagstellung der Greifzange an dem Ausleger ist die Greifzange durch Führungsmittel so orientiert, daß sie parallel zum Ausleger fluchtet, wodurch ein Orientierung zum Faß erleichtert wird. Die gesamte Transport- und Bugsiervorrichtung hat etwa die Größe einer Bedienungsperson, und sie ist leicht zusammenlegbar und auf den Lieferwagen von einer Person aufladbar. Das Zusammenfalten der Vertikalstütze erfolgt durch je ein bodenseitiges und ein etwa mittiges Faltgelenk, welches in der Arbeitsstellung jeweils verriegelbar ist. Alternativ ist die Vertikalstütze teleskopartig ausgestaltet, wodurch gleichfalls die gesonderte Verschiebeführung des Schwenkkopfes entfällt. Der Schwenkkopf oder das ausfahrbare Teleskopteil der Vertikalstütze ist mit einem handsteuerbaren und sperrbaren Dämpfer verbunden, welcher dem sachten Absenken des Fasses von dem hohen Lieferwagenniveau auf ein niedriges Kelleröffnungsniveau dientt. Das Ausziehen des Telekops oder das Heraufschieben des Schwenkgelenkes geschieht praktisch ungedämpft z.B. durch ein geeignetes Ventil in einen pneumatischen Dämpfer.

Der Ausleger läßt sich ebenfalls vorteilhaft teleskopartig ausgestalten, wobei der bedienerseitige Teil als Hebelarm konstanter Länge ausgebildet ist und der greiferseitige Ausleger ausfahrbar ausgebildet ist. Da das Gerät insgesamt außerordentlich leicht ist, damit es von einer Person auf den Lieferwagen aufgeladen werden kann, ist es vorgesehen, daß das Fahrgestell eine Trittplattform aufweist, auf der der Bediener mit seinem Eigengewicht eine Gegengewicht zu dem Faß bildet, wenn dieses auf dem Lieferwagen angehoben oder in das Kellerloch über das vordere Fahrgestell hinausgeschoben wird.

Es ist vorgesehen, daß bei einer Belastung des Trittbretts die Räder des Fahrgestelles blockiert sind, so daß ein sicherer Stand der Vorrichtung gewährleistet ist.

In den Figuren 1 bis 9 sind bevorzugte Ausführungen dargestellt.
- Fig. 1A bis 1K: zeigen die verschiedenen Betriebsstellungen des Transportgerätes;
- Fig. 2: zeigt eine Seitenansicht;
- Fig. 3: zeigt eine Frontansicht ohne Greifer und Seile;
- Fig. 4: zeigt die Vorrichtung zusammengefaltet;
- Fig. 5: zeigt ein vergrößertes Detail, den Schwenkkopf;
- Fig. 6: zeigt im Detail den Steuerkopf;
- Fig. 7: zeigt die Greifzange in Seitenansicht;
- Fig. 8: zeigt eine Steuerseilzugvorrichtung;
- Fig. 9: zeigt eine weitere Ausgestaltung mit Teleskopsäule und -ausleger.

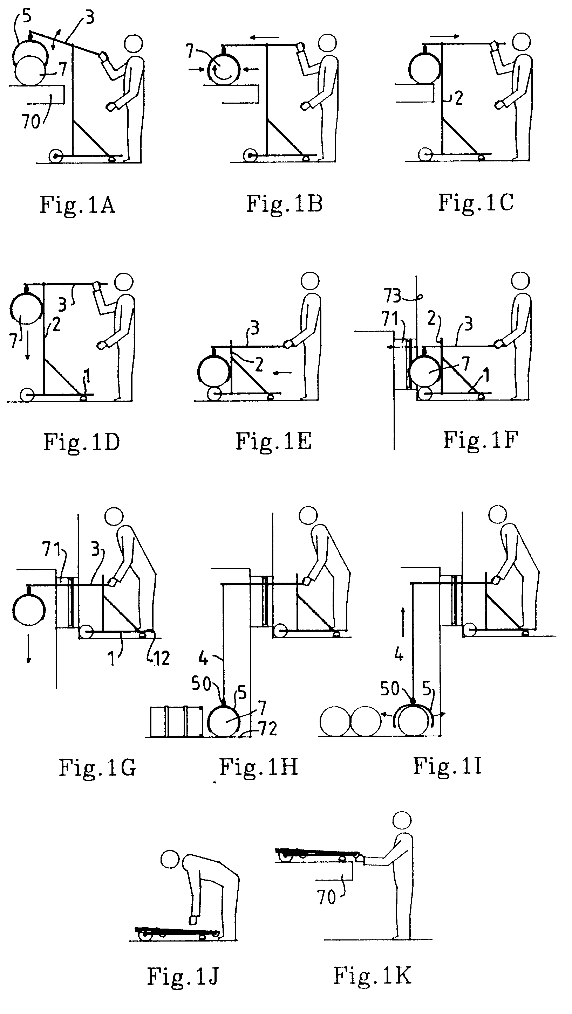

Die Figuren 1A bis 1I zeigen das Transportgerät in aufgefalteter und verriegelter Arbeitsstellung. In Figur 1 wird der Greifer (5) über ein Faß (7) auf einer Ladefläche (70) verbracht, wobei der Ausleger (3) greiferseitig nach oben verschwenkt ist.

In Figur 1B wird die Greifzange um das Faß (7) geschlossen, worauf es zu der Vertikalstütze (2) gemäß Figur 1C herangezogen wird.

Gemäß Figur 1D erfolgt dann eine Absenkung des Fasses (7) auf das Fahrgestell (1). Die Absenkung des Auslegers (3) an der Vertikalstütze (2) erfolgt gedämpft gemäß der jeweiligen Handsteuerung des Dämpfers in der Vertikalstütze. In der angezogenen Stellung des Auslegers (3) befindet sich der Schwerpunkt des Bierfasses (7) innerhalb des Unterstützungsbereiches des Fahrgestelles (1), so daß ein sicherer Stand der Vorrichtung gegeben ist.

In Figur 1E wird die gesamte Transportvorrichtung auf den Fahrgestellrollen verfahren. Hierbei ist der Ausleger (3) mit der Vertikalstütze (2) handbetätigt verriegelt. Die Rollen des Fahrgestelles sind wie bei bekannten Transportgeräten so ausgestaltet, daß ein Verfahren und Verschwenken leicht möglich ist, wozu die bedienerseitigen Rollen um eine vertikale Achse verschwenkbar ausgestaltet sind.

In Figur 1F ist das Faß vor eine Kelleröffnung (71) verbracht, und die Verriegelung des Auslegers (3) mit der Vertikalstütze (2) wird gelöst. Das Fahrwerk (1) ist an der Hauswand (73) abgestützt.

Figur 1G zeigt die Verschiebung des Auslegers (3) durch die Kelleröffnung (71), wobei der Bediener auf dem Trittbrett (12) des Fahrgestelles (1) steht. Hierbei wird das Fahrgestell aus Sicherheitsgründen blockiert.

Gemäß Figur 1H erfolgt nun handbetätigt das Absenken des Fasses (7) durch eine Freigabe der Tragseile (4), die mittels eines Dämpfers ein weiches Aufsetzen des Fasses (7) auf den tiefliegenden Kellerboden (72) erbringt. In Figur 1I wird der Steuerkopf (50) der Greifzange (5) bedient und dadurch die Zange geöffnet. Danach erfolgt das Einziehen des Tragseiles (4) durch den Bediener.

Nach erfolgter Auslagerung der Fässer in den Keller wird das Gerät gemäß Figur 1J zusammengefaltet und gemäß Figur 1K auf die Ladefläche (70) des Lieferwagens abgestellt.

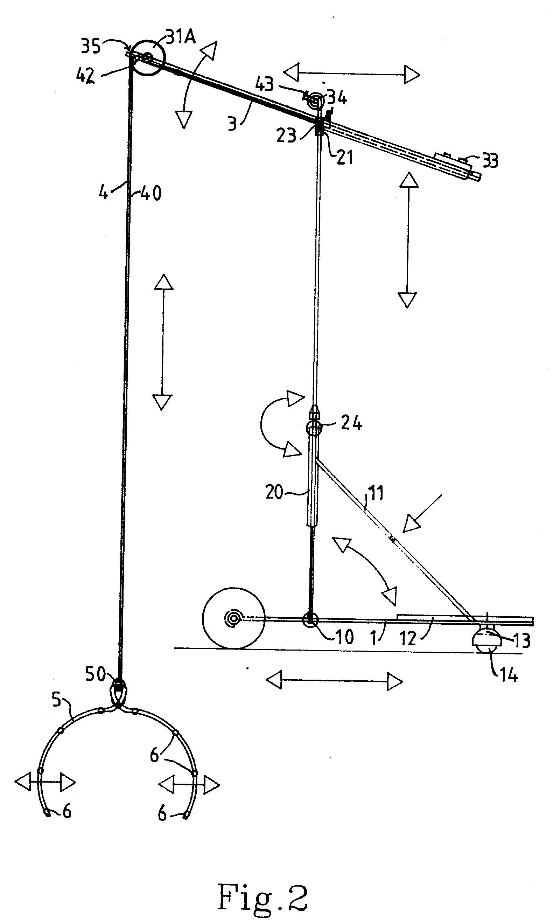

Figur 2 zeigt eine Seitenansicht des Transportgerätes. Auf dem Fahrgestell (1) befindet sich ein Trittbrett (12) welches mit einem Sperriegel (13) auf das hintere Rollenpaar (14) im belasteten Zustand sperrend einwirkt. Vor dem Trittbrett (12) befindet sich ein Schwenkgelenk (10) und eine rastbare Schrägstrebe (11), die die Vertikalstütze (2) im ausgefalteten Zustand senkrecht halten. Die Vertikalstütze (2) weist in der Mitte ein feststellbares Faltgelenk (24) auf. An der Vertikalstütze (2) ist eine Gleitbuchse (21) gelagert, die einen Schwenkkopf (23) trägt, in der der Ausleger (3) verschieblich und verschwenkbar gehalten ist.

Der Schwenkkopf ist mit einem Dämpfer (20) verbunden, der ein langsames Absenken desselben unter Last ermöglicht. Der Dämpfer (20) ist vorzugsweise als pneumatischer Zylinder ausgestaltet, der ein Ventil besitzt welches beim Hochziehen des Kolbens eine freie Luftzufuhr ermöglicht. Weiterhin ist der Zylinder mit einer pneumatischen Steuerleitung mit Steuertasten (33) am Ausleger (3) verbunden ist, mit denen eine Sperrung oder ein gedämpftes Austreten der Luft bewirkt werden kann.

Endseitig am Ausleger befinden sich Tragseilführungen (35), die durch Seiltrommeln (31A) einer Seilwinde (31) für das Tragseil (4) der Greifzange (5) gebildet sind. Parallel zum Tragseil läuft ein Steuerseil (40) welches über Umlenkrollen (42) am Ausleger (3) zu einer Steuerseilwickeltrommel (34) laufen. Das Tragseil und das Steuerseil (4, 40) sind an einen Steuerkopf (50) der Greifzange (5) geführt. Die Greifzange (5) ist innenseitig mit Rollen (6) bestückt.

Die Steuerseilwickeltrommel (34) weist eine Wickelfeder auf, die das Steuerseil (40) ständig unter einer leichten Spannung hält. An der Steuerseilwickeltrommel befindet sich eine Zugvorrichtung (43) mit der das Steuerseil so stark angezogen werden kann, daß in dem Steuerkopf (50) eine Öffnung der Greifzange (5) bewirkt wird.

Statt eines Steuerseiles sind in altewrnativen Ausführungen elektrische Betätigungskabel oder eine pneumatische Verbindung zu einer Handbetätigungsvorrichtung am Ausleger geführt und andererseits an dem Steuerkopf entsprechende Stellmittel angebracht.

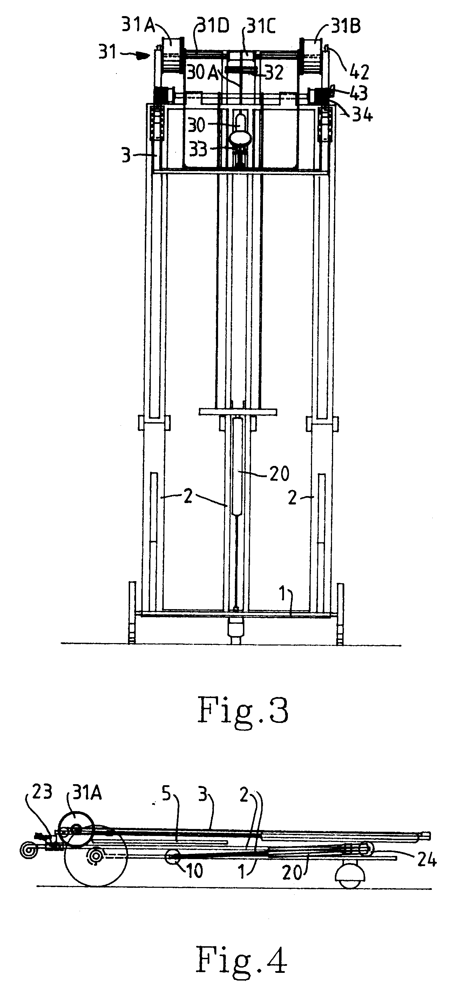

Figur 3 zeigt eine Stirnansicht der Vorrichtung. Auf dem Fahrgestell (1) ist die aus drei Säulen (2) bestehende Vertikalstütze aufgestellt. In der mittleren Stütze ist der Dämpfer (20) angeordnet, der mit dem Schwenkkopf verbunden ist. An dem Schwenkkopf ist der Ausleger (3) gehalten, der ebenfalls rahmenförmig aus mehreren parallelen Streben aufgebaut ist. Endseitig an dem Ausleger befindet sich eine Seilwinde (31) mit den Seiltrommeln (31A, 31B) für die beiden Tragseile von zwei Greifzangen, die auf einer Wicklerachse (31D) befestigt sind. An dieser ist ein Seiltrommelgetriebe (31C) angeschlossen, welches mit einer Kolbenstange (30A) eines pneumatischen Dämpfers (30), der dem gedämpften Herablassen des Seiles dient, verbunden ist. Außerdem ist eine Seilzugvorrichtung (32) mit dem Wickelgetriebe (31C) verbunden, mit dem handbetätigt die Tragseile aufgewickelt werden können. Seitlich am Ausleger (3) sind die Steuerseilwickeltrommeln (34) und die Steuerseil-Zugvorrichtungen (43) gehalten. Endseitig des Auslegers (3) sind Umlenkungen (42) für die Steuerseile angebracht.

Fig. 4 zeigt das Transportgerät zusammengefaltet. Die Vertikalstütze (2) ist in den Faltgelenken (10, 24) eingefaltet. Die ganze Vorrichtung ist nur wenig länger als das Fahrgestell (1).

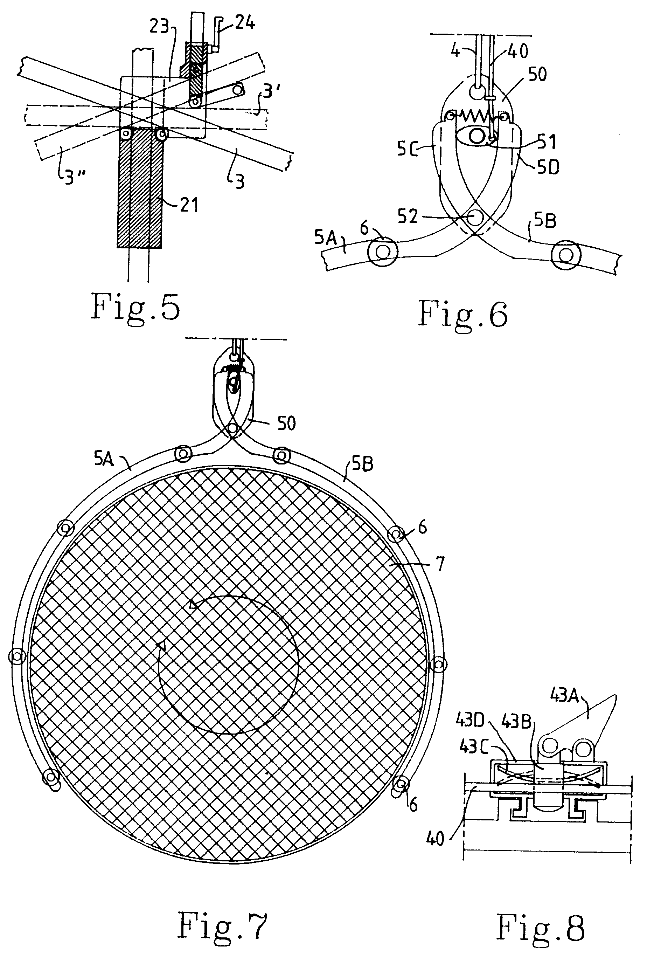

Fig. 5 zeigt schematisch den Schwenkkopf (23), der den Ausleger (3) an der Vertikalstütze hält, teilweise geschnitten und mit verschieden verschwenktem Ausleger (3', 3''). Der Schwenkkopf (23) ist mit einem Gleitschlitten (21) an der Vertikalstütze (2) verschieblich gelagert. Die Verschiebung des Auslegers (3) kann über eine handbetätigbare Klemmvorrichtung (24) gesperrt werden.

Fig. 6 zeigt den Steuerkopf (50) an dem die Zangenarme (5A, 5B) gelenkig gelagert sind. Diese Arme sind mit Zangenhebeln (5C, 5D) über das Gelenk (52) verlängert. Zwischen den Zangenhebeln befindet sich ein drehbar gelagertes Spreizstück (51), das etwa elliptisch geformt ist. Es ist so dimensioniert, daß es in der dargestellten Querstellung die Zangenarme (5A, 5B) um ein Faß schließt, so daß dieses sich noch darin drehen kann, wenn es gerollt wird. Das Spreizstück ist durch eine nicht sichtbare Drehfeder in die dargestellte Stellung, in der die Zange sicher geschlossen gehalten ist, gegen einen Anschlag verdreht. Das Steuerseil (40) dient der Rückdrehung des Spreitzstückes (51) gegen die Federkraft und dadurch der Lösung der Greifzange (5). Eine Feder unterstütz die Öffnung der Greifarme. Statt der Drehfeder kann auch ein zweites Steuerseil (40') vorgesehen sein, mit dem das Schließen des Greifers gesteuert wird.

Die beiden parallel angeordneten Greifzangen lassen sich über einen Steuerkopf und ein Steuerseil bedienen, wenn beide Steuerköpfe und beide Spreitzstücke miteinander durch Querstreben verbunden sind. Eine solche Parallelhalterung der Greifzangen erleichtert das Greifen der Fässer; sie führt jedoch zu einem größeren Volumenbedarf im zusammengefalteten Zustand.

Figur 7 zeigt eine Seitenansicht der Greifzange (5) mit einem Faß (7). Es sind die innenseitig angeordneten Rollen (6) zu erkennen, die ein Rollen des Fasses im ergriffenen Zustand erlauben.

Figur 8 zeigt eine Schnittzeichnung einer Seilzugvorrichtung (43) für das Steuerseil (40), bei der ein Hebel (43A) über einen Zapfen (43B) durch den das Steuerseil (40) hindurchgeführt ist, je nach Stellung klemmend oder freigebend einwirkt. An den Zapfen ist eine Blattfeder (43C) angesetzt, welche in einem engen Gehäuse (43D) so gehalten ist, daß sie in zwei verschiedene stabile Lagen verbringbar ist. Die Verstellung des Zapfens gegen die Federkraft wird mit dem freien Hebelarm an dem Hebel (43A) handbetätigt jeweils vorgenommen.

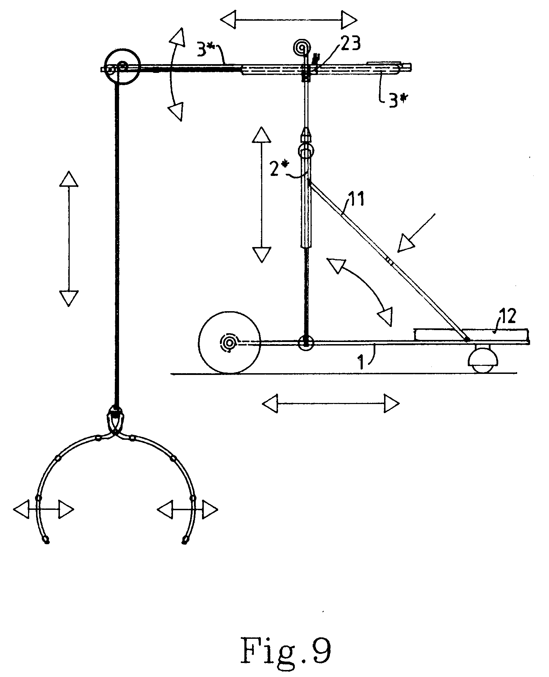

Figur 9 zeigt eine Seitenansicht einer weiteren Ausführungsform. Bei dieser ist die Vertikalstütze (2*) teleskopartig ausgebildet. Der Dämpfer für die absenkende Bewegung des oberen Teleskopteiles ist in den Teleskopständer integriert. Weiterhin ist der Ausleger (3*) als ein Teleskopauszug ausgestaltet. Aus diesem Grunde ist der vordere Teil der zu der Seilumlenkung gerichtet ist, teleskopartig aus dem hinteren Bedienungsarm herausfahrbar. Das Schwenkgelenk, daß sich zwischen dem Ausleger (3*) und der Vertikalstütze (2*) befindet, ist auf diese Weise nur für das Schwenken ausgebildet und hat keine Verschiebe- und Festellmittel. An der Vertikalstütze (2*) ist eine faltbare Schrägstrebe (11) angelenkt, die andererseits an das Fahrgestell (1) angelenkt ist.

## Patentansprüche

1. Transportgerät, insbesondere für das Transportieren und Bugsieren von Fässern, mit einem Fahrgestell (1), einer darauf angeordneten Vertikalstützte (2), einem daran axial verschieblich und vertikal schwenkbar gelagerten Ausleger (3) mit einem einenends daran gehaltenen Tragseil (4), das einenends zu einer Seilwinde (31) führt und andernends eine Greifzange (5) mit einem Steuerkopf (50) trägt, von dem ein Steuermittel (40) parallel zum Tragseil (4) an den Ausleger (3) geführt ist, dadurch gekennzeichnet, daß an dem Ausleger (3) mindestens zwei Tragseilführungen (35) nebeneinander beabstandet miteinander verbunden angeordnet sind, die je ein Tragseil (4) tragen, das je eine Greiferzange (5) trägt, und daß die Seilwinde (31) diese Tragseile (4) parallel aufwickelt und handgesteuert freigegeben gebremst abwickelt.

2. Transportgerät nach Anspruch 1, dadurch gekennzeichnet, daß die Greifzangen (5) innenseitig mit Rollen (6) bestückt sind.

3. Transportgerät nach Anspruch 1 oder 2, dadurch gekennzeichnet, daß jede der Greifzangen (5) aus zwei teilkreisförmigen Zangenarmen (5A, 5B) besteht, die an dem Steuerkopf (50) gelenkig gelagert sind und zwischen denen ein Spreizstück (51) mit einer Schließfeder (53) angeordnet ist, an dem das Steuermittel (40) gegen die Schließfederkraft öffnend angreift.

4. Transportgerät nach Anspruch 3, dadurch gekennzeichnet, daß das Spreizstück (51) ein etwa elliptischer Exzenter (51) ist, der zwischen Zangenhebelarmen (5C, 5D) angeordnet ist und auf den eine Rückstellfeder (53) einwirkt, so daß die Zangenarme (5A, 5B) sich schließen und in einer Anschlagstellung des Exzenters (51) in einer Totlage zu den Zangenhebelarmen (5C, 5D) die Greifzange (5) sicher geschlossen halten.

5. Transportgerät nach Anspruch 4, dadurch gekennzeichnet, daß an dem Exzenter (51) als das Steuermittel ein Steuerseil (40) gegen die Rückstellfederkraft angreift, das parallel zu dem Tragseil (4) verläuft und von einer Steuerseilwickeltrommel (34) federbelastet auf- und abwickelnd unter einer leichten Spannung gehalten ist und mit einer handbetätigbaren Steuerseilzugvorrichtung (43), den Exzenter (51) gegen die Federkraft verdrehend, betätigbar ist.

6. Transportgerät nach Anspruch 1, dadurch gekennzeichnet, daß die Seilwinde (31) aus zwei Seiltrommeln (31A, 31B) für die beiden Tragseile (4) besteht und die Seiltrommeln (31A, 31B) durch eine Wicklerachse (31D) miteinander verbunden sind, an der ein Seilgetriebe (31C) anreift, das mit einem Dämpfer (30) eines Seilablaufs und mit einer handbetätigbaren Seilzugvorrichtung (32) verbunden ist.

7. Transportgerät nach einem der vorstehenden Ansprüche, dadurch gekennzeichnet, daß der Ausleger (3) zwei parallele Holme aufweist, die rahmenartig miteinander verbunden sind und jeweils in einem Schwenkkopf (23) axialverschieblich und so verschwenkbar gelagert sind, daß die Tragseilführungen (35) etwa horizontal fluchtend mit dem Schwenkkopf (23) anschlagmäßig gehalten sind und mit den Holmen nach oben anzuheben sind.

8. Transportgerät nach einem der vorstehenden Ansprüche, dadurch gekennzeichnet, daß der Ausleger (3*) teleskopartig ausschiebbar ist und die Tragseilführungen (35) an dem ausschiebbaren Teleskopauslegerteil angeordnet sind.

9. Transportgerät nach Anspruch 7 oder 8, dadurch gekennzeichnet, daß der Schwenkkopf (23) und/oder der Teleskopausleger (3*) einen Dämpfer enthält/enthalten.

10. Transportgerät nach einem der vorstehenden Ansprüche, dadurch gekennzeichnet, daß der Schwenkkopf (23) an der Vertikalstützte (2) verschieblich gelagert ist und mit einem von Hand steuerbaren und sperrbaren Dämpfer (20) für eine Absenkverschiebung sowie eine freie Anhebeverschiebung des Schwenkkopfes (23) verbunden ist.

11. Transportgerät nach Anspruch 10, dadurch gekennzeichnet, daß die Vertikalstütze (2) um ein etwa mittiges feststellbares Faltgelenk (24) und ein fahrgestellseitiges feststellbares Faltgelenk (10) auf das Fahrgestell (1) einfaltbar ist.

12. Transportgerät nach Anspruch 1 bis 9, dadurch gekennzeichnet, daß die Vertikalstütze (2*) teleskopartig ausziehbar ist und mit einem Dämpfer (20) für ein freies Ausziehen und ein handsteuerbar gedämpftes oder sperrbares Einschieben verbunden ist.

13. Transportgerät nach Anspruch 12, dadurch gekennzeichnet, daß die Vertikalstütze (2*) um ein fahrgestellseitiges feststellbares Faltgelenk (10) schwenkbar ist.

14. Transportgerät nach einem der vorstehenden Ansprüche, dadurch gekennzeichnet, daß die Vertikalstütze (2, 2*) maximal etwa körperhoch ist, die Greifzangen (5) zu einem Getränkefaß (7) umfangsmäßig passen, der Ausleger (3, 3*) rückseitig der Vertikalstütze (2, 2*) als handbetätigbarer Hebelarm verlängert ist und das Fahrgestell (1) rahmenförmig gestaltet ist, und es frontseitig bis über einen Greifzangenschwerpunkt hinausragt, wenn der Ausleger (3, 3*) zur Vertikalstütze (2, 2*) zurückgezogen ist, und es bedienerseitig ein Bedienertrittbrett (12) trägt.

15. Transportgerät nach Anspruch 14, dadurch gekennzeichnet, daß das Trittbrett (12) im belasteten Zustand das Fahrwerk (1) sperrt.
